# EUROPÄISCHE PATENTSCHRIFT

(11) **EP 4 136 332 B1**
(45) Veröffentlichungstag und Bekanntmachung des Hinweises auf die Patenterteilung: **25.09.2024**
(21) Anmeldenummer: 21714822.0
(22) Anmeldetag: 17.03.2021
(51) Int. Cl.: F02B 19/12, F02B 19/18, F02P 13/00, H01T 13/39

(54) **FREMD GEZÜNDETE HUBKOLBEN-BRENNKRAFTMASCHINE MIT EINEM VORKAMMERZÜNDSYSTEM**
EXTERNAL IGNITION PISTON COMBUSTION ENGINE WITH A PRECHAMBER EXTERNAL IGNITION SYSTEM
MOTEUR À COMBUSTION À PISTON À ALLUMAGE EXTERNE AVEC UN SYSTÈME DE PRÉCHAMBRE D'ALLUMAGE EXTERNE

(30) Priorität: 16.04.2020 DE 102020110395
(43) Veröffentlichungstag der Anmeldung: 22.02.2023
(73) Patentinhaber: Bayerische Motoren Werke Aktiengesellschaft, 80809 München (DE)
(72) Erfinder: HAGENEDER, Ludwig, 84032 Landshut (DE)
(86) Internationale Anmeldenummer: PCT/EP2021/056752
(87) Internationale Veröffentlichungsnummer: WO 2021/209215

(56) Entgegenhaltungen:
- DE-A1- 102018 206 784
- DE-A1- 102019 115 735
- DE-B3- 102015 204 814
- US-A- 2 487 535

## Beschreibung

Die Erfindung betrifft eine fremd gezündete Hubkolben-Brennkraftmaschine mit einem Vorkammerzündsystem mit den Merkmalen aus dem Oberbegriff des Patentanspruchs 1.

Zum technischen Umfeld wird beispielsweise auf die deutsche Offenlegungsschrift DE 10 2014 111 897 A1 hingewiesen. Aus dieser ist eine Zündeinrichtung zum Zünden von Brennstoff-Luft-Gemischen in einer Brennkammer eines Verbrennungsmotors mittels einer Corona-Entladung bekannt, mit einer Zündelektrode, einen die Zündelektrode umgebenden Außenleiter, welcher ein vorderes und ein hinteres Ende hat und mit einem zwischen der Zündelektrode und dem Außenleiter angeordneten elektrischen Isolator, aus welchem wenigstens eine Spitze der Zündelektrode herausragt. Die wenigstens eine Spitze der Zündelektrode liegt in einem Raum, der durch eine dem Isolator zugeordnete Kappe abgeschirmt ist, die eine dem Isolator zugewandte Innenseite und eine dem Isolator abgewandte Außenseite sowie eines oder mehrere Löcher hat, durch welche der abgeschirmte Raum mit einem auf der Außenseite der Kappe liegenden Raum, der Brennkammer, in Verbindung steht.

Weiter ist aus der internationalen Patentanmeldung mit der internationalen Veröffentlichungsnummer WO 2008/031482 A2 eine Zündkerze zum Zünden eines brennbaren Gasgemisches beim Verbrennungsmotor bekannt, umfassend:
eine Zündelektrode,
eine elektrische Versorgungsleitung, an welche die Zündelektrode angeschlossen ist, einen Isolatorkörper, durch den die Versorgungsleitung hindurchgeführt ist,
ein Gehäusekopf, der dichtend auf dem Isolatorkörper sitzt und ein Außengewinde zum Einschrauben in einen Verbrennungsmotor, ein Rohrgehäuse, das an dem Gehäusekopf befestigt ist, den Isolatorkörper umgibt und einen Sechskant trägt, wobei das Rohrgehäuse eine Isolatorkörper-Halterung umgibt, die über eine Schweißnaht mit dem Gehäusekopf verschweißt ist und den Isolatorkörper mit einer Vorspannung gegen den Gehäusekopf presst.

Zum weiteren technischen Umfeld wird ferner auf die deutsche Offenlegungsschrift DE 10 2016 120 984 A1 hingewiesen. Aus dieser Offenlegungsschrift ist eine Vorkammerzündkerze für eine mit Gas betriebene Brennkraftmaschine und ein Verfahren zu deren Herstellung bekannt.

Weiter ist aus der deutschen Offenlegungsschrift DE 10 2016 206 992 A1 eine Zündkerze bekannt. Bei der Zündkerze handelt es sich insbesondere um eine Vorkammerzündkerze, mit einem Gehäuse, einer Zündelektrode und einer Masseelektrode, wobei die Zündelektrode über eine Versorgungsleitung mit einer elektrischen Spannung beaufschlagbar ist und wobei die Versorgungsleitung zumindest teilweise innerhalb eines Isolators verläuft, wobei zumindest ein Ableitungsbereich des Gehäuses aus einem Material mit einer Wärmeleitfähigkeit von über 150 W/(m*K) hergestellt ist.

Aus der Deutschen, noch nicht veröffentlichten Patentanmeldung mit dem amtlichen Aktenzeichen DE 10 2020 105 924.8, von der die vorliegende Erfindung ausgeht, ist eine fremd gezündete Hubkolben-Brennkraftmaschine mit einem Vorkammerzündsystem bekannt. Das Vorkammerzündsystem ist in dem Zylinderkopf der Hubkolben-Brennkraftmaschine angeordnet und in dem Vorkammerzündsystem ist eine Zündvorrichtung mit einer Zündelektrode angeordnet, die in den Hohlraum des Vorkammerzündsystems ragt. Der Hohlraum ist mit einem Deckel gegenüber dem Brennraum der Hubkolben-Brennkraftmaschine abgedeckt ist, wobei der Deckel mehrere Durchbrüche aufweist, die den Hohlraum und den Brennraum Gas führend miteinander verbinden. Weiter ist in dem Hohlraum, im Bereich der Zündelektrode eine metallische Querstrebe mit zumindest einem zweiten Durchbruch angeordnet, wobei die Zündelektrode in den zweiten Durchbruch ragt.

Bei einer in dem Vorkammerzündsystem verschraubten Zündvorrichtung mit einer Zündelektrode zündet diese üblicher Weise zu einer vorkammerfesten Masseelektrode. Bei Standard-Brennverfahren mit einer Zündkerze ist diese Masseelektrode z. B. in Form einer Haken-Elektrode dargestellt. Diese Masseelektrode ist aus einem einzigen metallischen Material dargestellt.

Das Gehäuse eines Vorkammerzündsystems ist oft aus einem hoch wärmeleitfähigen Material, wie z. B. Kupfer (Cu) oder einer Kupferlegierung und die Masseelektrode ist aus einem temperaturfesten, bzw. hochtemperaturfesten metallischen Material, wobei das Gehäuse und die Masseelektrode gegebenenfalls verschiedene Wärmeausdehnungskoeffizienten aufweisen können. Dies hat bei höheren Lasten einer Brennkraftmaschine den Nachteil, dass der Kontakt zwischen der Masseelektrode, aufgrund des geringeren Wärmeleitwertes, zum Gehäuse des Vorkammerzündsystems mit einem höheren Wärmeleitwert, schwächer ausgeprägt ist und dadurch die Wärmeableitung von der Masseelektrode über das Gehäuse des Vorkammerzündsystems zum Zylinderkopf stark reduziert wird. Das wiederum hat den Nachteil, dass die Masseelektrode einen thermischen Verschleiß/Schaden erleidet oder dass es an der Masseelektrode in nachteiliger Weise zu Glühzündungen kommen kann.

Außerdem offenbart die DE 10 2015 204 814 B3 eine Vorkammerzündkerze zur Zündung eines Kraftstoff-Luft-Gemisches in einem Verbrennungsmotor.

Aufgabe der vorliegenden Erfindung ist es, eine Maßnahme aufzuzeigen, um oben genannte Nachteile zu vermeiden.

Diese Aufgabe wird durch das Merkmal im kennzeichnenden Teil des Patentanspruchs 1 gelöst.

Vorteilhafte Weiterbildungen der Erfindung sind in den Unteransprüchen beschrieben.

Erfindungsgemäß soll eine Funktionstrennung der Querstrebe, die die Aufgabe der Masseelektrode übernimmt, über die Kombination von zwei unterschiedlichen Materialien erfolgen.

Der Bereich der Querstrebe, der Kontaktbereich der Querstrebe, der direkt in das Gehäuse des Vorkammerzündsystems gefügt wird, soll in dem gleichen Material wie das Gehäuse des Vorkammerzündsystems selbst dargestellt werden. Nur der Teil der der Querstrebe, die Masseelektrode in dem Vorkammerzündsystem, ist aus einem speziellen Elektrodenmaterial. Dadurch hat man im Bereich der Fügestellen der Querstrebe in das Gehäuse des Vorkammerzündsystems eine ideale Wärmeabfuhr ohne Spaltbildung.

Erfindungsgemäß ist es vorgesehen, dass die Querstrebe in dem Kontaktbereich aus dem gleichen metallischen Werkstoff ist wie das Gehäuse ist.

Die Ausgestaltung gemäß dem Anspruch 2 konkretisiert die notwendigen Anforderungen an den Kontaktbereich der Querstrebe.

Die Ausgestaltungen gemäß den Ansprüchen 3 und 4 konkretisieren die notwendigen Anforderungen an den Mittenbereich der Querstrebe.

Anspruch 5 definiert darüber hinaus, dass der Mittenbereich der Querstrebe als Masseelektrode dient.

Die Ausgestaltung gemäß Anspruch 6, dass der Mittenbereich und der Kontaktbereich der Querstrebe durch Schweißen, insbesondere durch Reibschweißen miteinander verbunden sind, ist eine besonders bevorzugte Ausführungsvariante, die kostengünstig und einfach darstellbar ist. Voraussetzung hierbei ist jedoch, dass die Materialien von Mittenbereich und Kontaktbereich miteinander durch Reibschweißen miteinander verbindbar sind.

Die Ausgestaltung gemäß Anspruch 7, dass der Kontaktbereich und das Gehäuse kraft- und/oder formschlüssig und/oder materialschlüssig miteinander verbunden sind ist ebenfalls eine bevorzugte Ausführungsform.

Im Folgenden ist die Erfindung anhand von einem Ausführungsbeispiel in einer einzigen Figur näher erläutert.

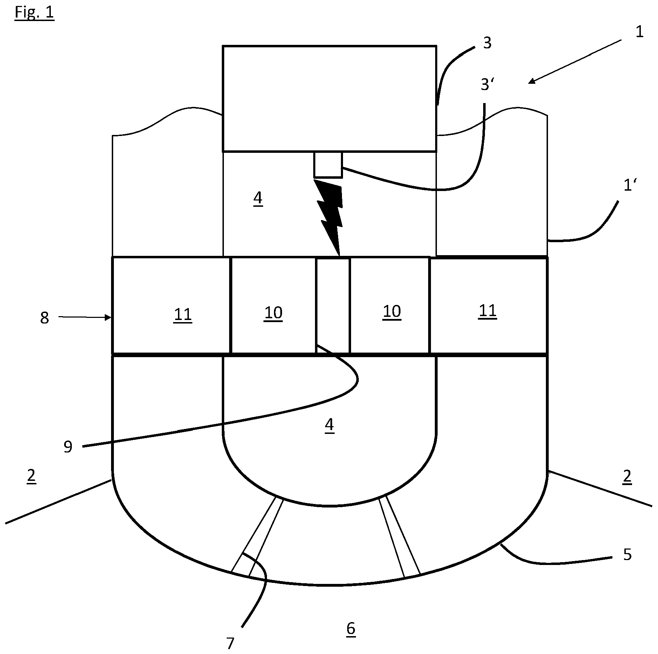

- Fig. 1: zeigt eine Aufsicht auf einen Schnitt durch ein erfindungsgemäßes Vorkammerzündsystem.

Fig. 1 zeigt eine Aufsicht auf einen Schnitt durch ein erfindungsgemäßes Vorkammerzündsystem 1. Das Vorkammerzündsystem 1 ist für eine fremd gezündete Hubkolben-Brennkraftmaschine vorgesehen. Ein Gehäuse 1' des Vorkammerzündsystems 1 ist in einem Zylinderkopf 2 der Hubkolben-Brennkraftmaschine angeordnet und besteht aus einem gut Wärme leitenden Metall wie beispielsweise Kupfer oder einer Kupferlegierung. Im vorliegenden Fall ist das Vorkammerzündsystem 1 in den Zylinderkopf 2 eingeschraubt. Auch Verklemmen, Verscheißen oder Verlöten von Vorkammerzündsystem 1 und Zylinderkopf 2 ist möglich.

Von einer, einem Brennraum 6 der Hubkolben-Brennkraftmaschine abgewandten Seite ist eine Zündvorrichtung 3, beispielsweise eine Zündkerze mit einer Zündelektrode 3' in das Vorkammerzündsystem 1 eingebracht. Auch hier liegt wieder eine nicht dargestellt Verschraubung vor. Auch eine Corona-Zündvorrichtung oder sonstige Zündquelle ist möglich. Die Zündvorrichtung 3 ragt in einen Hohlraum 4 des Vorkammerzündsystems 1.

Auf der, der Zündvorrichtung 3 abgewandten Seite ist der Hohlraum 4 mit einem Deckel 5 gegenüber einem Brennraum 6 der Hubkolben-Brennkraftmaschine abgedeckt. Der Deckel 5 weist zumindest einen ersten Durchbruch 7 auf, der den Hohlraum 4 und den Brennraum 6 Gas führend miteinander verbindet. Im vorliegenden Ausführungsbeispiel sind zwei Durchbrüche 7 erkennbar, von denen nur ein einziger beziffert ist. Anzahl, Größe und Lage der Durchbrüche 7 können von Vorkammerzündsystem 1 zu Vorkammerzündsystem 1 variieren.

Weiter ist in dem Hohlraum 4 im Bereich der Zündelektrode 3' eine metallische Querstrebe 8 mit zumindest einem zweiten Durchbruch 9 angeordnet. Hierbei ragt die Zündelektrode 3' in den Bereich des zweiten Durchbruchs 9. Die Querstrebe 8 unterteilt somit den Hohlraum 4 in eine nicht bezifferte Restgaskammer und eine ebenfalls nicht bezifferte Frischgaskammer. Die Restgaskammer erstreckt sich zwischen der Zündvorrichtung 3 und der Querstrebe 8 und die Frischgaskammer erstreckt sich zwischen der Querstrebe 8 und dem Deckel 5.

In vorteilhafter Weise dient die Querstrebe 8 als Masseelektrode für die Zündelektrode 3`und erfüllt somit die Doppelfunktion von Masseelektrode und "Raumteiler".

Erfindungsgemäß ist die metallische Querstrebe 8 in einem Mittenbereich 10 aus einem ersten metallischen Werkstoff und in einem Kontaktbereich 11 mit dem Gehäuse 1' aus einem zweiten metallischen Werkstoff. Vorzugsweise ist die Querstrebe 8 in dem Kontaktbereich 11 aus einem wärmeleitfähigen metallischen Werkstoff, besonders bevorzugt ist die Querstrebe 8 in dem Kontaktbereich 11 aus dem gleichen metallischen Werkstoff ist wie das Gehäuse 1'. Dies bedeutet, dass die Kontaktbereiche 11, ebenso wie das Gehäuse 1' vorzugsweise aus Kupfer oder einer Kupferlegierung bestehen. Eine mechanische Verbindung der Kontaktbereich 11 und dem Gehäuse 1' erfolgt bevorzugt kraft- und/oder formschlüssig und/oder materialschlüssig, dies sind Verbindungstechnologien, die dem Fachmann hinreichend bekannt sind.

Gegenüber den Kontaktbereichen 11 besteht die Querstrebe 8 in ihrem Mittenbereich 10 aus einem hochtemperaturfesten metallischen Werkstoff wie z. B. aus einer Wolframlegierung oder einer Wolfram/Kupferlegierung oder einer Nickellegierung oder einem Inconelwerkstoff. Dies ist besonders vorteilhaft, da die Querstrebe 8 in ihrem Mittenbereich 10 als eine Masseelektrode für die Zündelektrode 3' fungiert. Besonders bevorzugt werden der Mittenbereich 10 und die Kontaktbereiche 11 durch Schweißen, insbesondere durch Reibschweißen miteinander verbunden. Auch diese sind Verbindungstechnologien sind dem Fachmann hinreichend bekannt.

### Zusammengefasst kann gesagt werden:

Eine Vorkammerzündung soll beispielsweise über ein CuCr1 Zr Gehäuse 1' (Kupfer-Chrom-Zirkon-Legierung) des Vorkammerzündsystems 1 erfolgen. Die Kontaktbereiche 11 der Querstrebe 8 sollen vorzugsweise in das Gehäuse 1' des Vorkammerzündsystems 1 verpresst werden, und beispielsweise auch aus CuCr1Zr ausgeführt sein. Zwischen den beiden CuCr1Zr Kontaktbereichen 11 befindet sich dann, vorzugsweise über Reibschweißung mit den Kontaktbereichen 11 verbunden, die eigentliche Massenelektrode, dargestellt durch den Mittenbereich 10. Dieser Mittenbereich 10 besteht dann aus vorzugsweise aus einer Wolfram/Kupfer-Sinterkombination (W/Cu) oder ganz aus Wolfram (W) oder Nickel (Ni) oder Inconel (Inconel ist ein Markenname der Firma Special Metals Corporation für hoch korrosionsbeständige Nickelbasislegierungen. Diese Nickelbasislegierungen werden vor allem für Hochtemperatur-Anwendungen benutzt.), beziehungsweise aus einem weiteren, für den Anwendungsfall geeigneten Material, das hochtemperaturfest, eine hohe Ausfunkbeständigkeit und eine hohe Wärmeleitfähigkeit besitzt. Sprich die Masseelektrode besteht dann aus mehreren, über Reibschweißung miteinander verbundenen Teilen.

Abschließend sei noch gesagt, dass die erfindungsgemäße Ausgestaltung des Vorkammerzündsystems 1 sowohl für passive Vorkammerzündsysteme, wie hier dargestellt, als auch für aktive Vorkammerzündsysteme, mit eigener Einbringung von Kraftstoff in den Hohlraum 4, eingesetzt werden kann.

In einem weiteren Ausführungsbeispiel kann das Gehäuse 1' auch von dem Zylinderkopfmaterial gebildet sein, d. h. das Gehäuse 1' ist dann eine Bohrung in dem Zylinderkopf 2.

### Bezugszeichenliste

- 1.: Vorkammerzündsystem
- 1': Gehäuse
- 2.: Zylinderkopf
- 3.: Zündvorrichtung
- 3`: Zündelektrode
- 4.: Hohlraum
- 5.: Deckel
- 6.: Brennraum
- 7.: Erster Durchbruch
- 8.: Querstrebe
- 9.: Zweiter Durchbruch
- 10.: Mittenbereich
- 11.: Kontaktbereich

## Patentansprüche

1. Fremd gezündete Hubkolben-Brennkraftmaschine mit einem Vorkammerzündsystem (1), welches in einem Zylinderkopf (2) der Hubkolben-Brennkraftmaschine angeordnet ist und in dem eine Zündvorrichtung (3) mit einer Zündelektrode (3') in einem Gehäuse (1') angeordnet ist, die in einen Hohlraum (4) des Vorkammerzündsystems (1) ragt, wobei der Hohlraum (4) mit einem Deckel (5) gegenüber einem Brennraum (6) der Hubkolben-Brennkraftmaschine abgedeckt ist, wobei der Deckel (5) zumindest einen ersten Durchbruch (7) aufweist, der den Hohlraum (4) und den Brennraum (6) Gas führend miteinander verbindet, wobei in dem Hohlraum (4) im Bereich der Zündelektrode (3') eine metallische Querstrebe (8) mit zumindest einem zweiten Durchbruch (9) angeordnet ist, die gegenüberliegende Seiten des Gehäuses (1') miteinander verbindet, wobei die metallische Querstrebe (8) in einem Mittenbereich (10) aus einem ersten metallischen Werkstoff und in einem Kontaktbereich (11) mit dem Gehäuse (1') aus einem zweiten metallischen Werkstoff ist,
**dadurch gekennzeichnet, dass**
die Querstrebe (8) in dem Kontaktbereich (11) aus dem gleichen metallischen Werkstoff ist wie das Gehäuse (1').

2. Hubkolben-Brennkraftmaschine nach Anspruch 1,
**dadurch gekennzeichnet, dass** die Querstrebe (8) in dem Kontaktbereich (11) aus einem wärmeleitfähigen metallischen Werkstoff ist.

3. Hubkolben-Brennkraftmaschine Anspruch 1 oder 2,
**dadurch gekennzeichnet, dass**
die Querstrebe (8) in ihrem Mittenbereich (10) aus einem hochtemperaturfesten metallischen Werkstoff ist.

4. Hubkolben-Brennkraftmaschine nach einem der Ansprüche 1 bis 3,
**dadurch gekennzeichnet, dass**
die Querstrebe (8) in ihrem Mittenbereich (10) aus einer Wolframlegierung oder einer Wolfram/Kupferlegierung oder einer Nickellegierung oder einem Inconelwerkstoff ist.

5. Hubkolben-Brennkraftmaschine nach einem der Ansprüche 1 bis 4,
**dadurch gekennzeichnet, dass**
die Querstrebe (8) in ihrem Mittenbereich (10) eine Masseelektrode für die Zündelektrode (3') ist.

6. Hubkolben-Brennkraftmaschine nach einem der Ansprüche 1 bis 5,
**dadurch gekennzeichnet, dass**
der Mittenbereich (10) und der Kontaktbereich (11) durch Schweißenmiteinander verbunden sind.

7. Hubkolben-Brennkraftmaschine nach einem der Ansprüche 1 bis 6,
**dadurch gekennzeichnet, dass**
der Kontaktbereich (11) und das Gehäuse (1') kraft- und/oder formschlüssig und/oder materialschlüssig miteinander verbunden sind.

## Claims

1. Spark-ignition reciprocating piston internal combustion engine with a prechamber ignition system (1) which is arranged in a cylinder head (2) of the reciprocating piston internal combustion engine and in which an ignition apparatus (3) with an ignition electrode (3') is arranged in a housing (1'), which ignition electrode (3') protrudes into a cavity (4) of the prechamber ignition system (1), wherein the cavity (4) is covered by a cover (5) with respect to a combustion chamber (6) of the reciprocating piston internal combustion engine, wherein the cover (5) has at least one first aperture (7) which connects the cavity (4) and the combustion chamber (6) to one another in a gas-conducting manner, wherein the metallic transfer strut (8) which has at least one second aperture (9) and connects opposite sides of the housing (1') to one another is arranged in the cavity (4) in the region of the ignition electrode (3'), wherein the metallic transfer strut (8) is made from a first metallic material in a central region (10), and is made from a second metallic material in a contact region (11) with the housing (1'),
**characterized in that**
the transverse strut (8) is made from the same metallic material as the housing (1') in the contact region (11).

2. Reciprocating piston internal combustion engine according to Claim 1,
**characterized in that** the transverse strut (8) is made from thermally conductive metallic material in the contact region (11).

3. Reciprocating piston internal combustion engine according to Claim 1 or 2,
**characterized in that**
the transverse strut (8) is made from a high-temperature-resistant metallic material in its central region (10).

4. Reciprocating piston internal combustion engine according to one of Claims 1 to 3,
**characterized in that**
the transverse strut (8) is made from a tungsten alloy or a tungsten/copper alloy or a nickel alloy or an Inconel material in its central region (10).

5. Reciprocating piston internal combustion engine according to one of Claims 1 to 4,
**characterized in that**
the transverse strut (8) is a ground electrode for the ignition electrode (3') in its central region (10).

6. Reciprocating piston internal combustion engine according to one of Claims 1 to 5,
**characterized in that**
the central region (10) and the contact region (11) are connected to one another by way of welding.

7. Reciprocating piston internal combustion engine according to one of Claims 1 to 6,
**characterized in that**
the contact region (11) and the housing (1') are connected to one another in a non-positive and/or positively locking and/or integrally joined manner.

## Revendications

1. Moteur à combustion interne à piston alternatif à allumage externe avec un système d'allumage à préchambre (1), qui est agencé dans une culasse (2) du moteur à combustion interne à piston alternatif et dans lequel un dispositif d'allumage (3) avec une électrode d'allumage (3') est agencé dans un boîtier (1'), qui fait saillie dans une cavité (4) du système d'allumage à préchambre (1), la cavité (4) étant recouverte d'un couvercle (5) par rapport à une chambre de combustion (6) du moteur à combustion interne à piston alternatif, le couvercle (5) présentant au moins un premier passage (7), qui relie entre elles la cavité (4) et la chambre de combustion (6) en guidant le gaz, une traverse métallique (8) avec au moins un deuxième passage (9) étant agencée dans la cavité (4) dans la zone de l'électrode d'allumage (3'), laquelle relie entre eux des côtés opposés du boîtier (1'), la traverse métallique (8) étant faite d'un premier matériau métallique dans une zone centrale (10) et d'un deuxième matériau métallique dans une zone de contact (11) avec le boîtier (1'),
**caractérisé en ce que**
la traverse (8) dans la zone de contact (11) est faite du même matériau métallique que le boîtier (1').

2. Moteur à combustion interne à piston alternatif selon la revendication 1,
**caractérisé en ce que** la traverse (8) dans la zone de contact (11) est faite d'un matériau métallique conducteur de chaleur.

3. Moteur à combustion interne à piston alternatif selon la revendication 1 ou 2,
**caractérisé en ce que**
la traverse (8) est faite, dans sa zone centrale (10), d'un matériau métallique résistant aux températures élevées.

4. Moteur à combustion interne à piston alternatif selon l'une quelconque des revendications 1 à 3,
**caractérisé en ce que**
la traverse (8) est faite dans sa zone centrale (10) d'un alliage de tungstène ou d'un alliage de tungstène/cuivre ou d'un alliage de nickel ou d'un matériau Inconel.

5. Moteur à combustion interne à piston alternatif selon l'une quelconque des revendications 1 à 4,
**caractérisé en ce que**
la traverse (8) est, dans sa zone centrale (10), une électrode de masse pour l'électrode d'allumage (3').

6. Moteur à combustion interne à piston alternatif selon l'une quelconque des revendications 1 à 5,
**caractérisé en ce que**
la zone centrale (10) et la zone de contact (11) sont reliées entre elles par soudage.

7. Moteur à combustion interne à piston alternatif selon l'une quelconque des revendications 1 à 6,
**caractérisé en ce que**
la zone de contact (11) et le boîtier (1') sont reliés l'un à l'autre par une liaison par la force et/ou par complémentarité de forme et/ou par matériau.
